# FASCICULE DE BREVET EUROPEEN

(11) **EP 3 945 360 B1**
(45) Date de publication et mention de la délivrance du brevet: **06.12.2023**
(21) Numéro de dépôt: 21187685.9
(22) Date de dépôt: 26.07.2021
(51) Int. Cl.: G02F 1/03

(54) **DISPOSITIF ÉLECTRO-OPTIQUE À DEUX CRISTAUX ÉLECTRO-OPTIQUES ET PROCÉDÉ DE FABRICATION**
ELEKTROOPTISCHE VORRICHTUNG MIT ZWEI ELEKTROOPTISCHEN KRISTALLEN UND ENTSPRECHENDES HERSTELLUNGSVERFAHREN
ELECTRO-OPTICAL DEVICE WITH TWO ELECTRO-OPTICAL CRYSTALS AND MANUFACTURING METHOD

(30) Priorité: 29.07.2020 FR 2008032
(43) Date de publication de la demande: 02.02.2022
(73) Titulaire: Cristal Laser, 54850 Messein (FR)
(72) Inventeur: LUPINSKI, Dominique, 54850 MESSEIN (FR); BONNIN, Christophe, 54850 MESSEIN (FR)
(74) Mandataire: Jacobacci Coralis Harle

(56) Documents cités:
- US-A- 3 402 002
- US-A1- 2002 181 514
- US-A1- 2010 142 046
- US-A1- 2013 170 785

## Description

### DOMAINE TECHNIQUE AUQUEL SE RAPPORTE L'INVENTION

La présente invention concerne de manière générale le domaine des cristaux électro-optiques.

Elle concerne plus particulièrement un dispositif électro-optique permettant de moduler en polarisation ou en phase un faisceau lumineux.

Un tel dispositif trouve notamment des applications dans les cellules de Pockels ou les modulateurs électro-optiques de phase.

### ARRIERE-PLAN TECHNOLOGIQUE

Les cristaux électro-optiques sont des matériaux optiquement anisotropes dont les indices de réfraction, et donc la biréfringence, peuvent être modulés par un champ électrique externe, classiquement appliqué via des électrodes disposées sur le cristal électro-optique. Au premier ordre, c'est-à-dire lorsque la modification des indices de réfraction est proportionnelle au champ électrique appliqué, cet effet est appelé effet Pockels. Dans certaines orientations, le cristal électro-optique agit alors comme une lame d'onde dont le retard de phase entre l'axe lent et l'axe rapide ainsi que l'orientation de ces axes peuvent être modulés par le champ électrique.

L'effet Pockels est généralement de faible amplitude. De ce fait, selon les orientations des cristaux électro-optiques et selon leur nature, un dispositif électro-optique peut nécessiter une tension de modulation très élevée, de l'ordre de plusieurs kilovolts.

Dans cette géométrie transverse, la biréfringence est souvent très sensible à la température.

Les performances d'un dispositif électro-optique comprenant un unique cristal électro-optique peuvent être dégradées par une variation de température du cristal électro-optique.

On connaît du document US 3402002 un dispositif électro-optique comprenant deux cristaux électro-optiques identiques et alignés en série de manière à diviser par deux la tension de modulation appliquée sur chaque cristal et à compenser de manière passive les dérives thermiques. Le document US2002/181514 divulgue un matériau pour modulateur électro-optique.

Un dispositif électro-optique comprenant deux cristaux électro-optiques permet de moduler avec une fréquence élevée la phase et/ou la polarisation d'un faisceau lumineux. Dans le cas d'une modulation de polarisation, en associant ce dispositif à un polariseur statique, il est alors aussi possible de moduler l'amplitude d'un faisceau lumineux. Un tel dispositif électro-optique est par exemple utilisé en tant qu'atténuateur variable dans les lasers impulsionnels déclenchés (ou Q-switch), il est alors couramment appelé cellule de Pockels. De préférence, une cellule de Pockels présente un contraste élevé entre l'état passant, pour lequel les pertes en transmission sont minimum, et l'état bloquant, pour lequel l'atténuation est forte.

Dans un dispositif électro-optique comprenant deux cristaux électro-optiques, ces derniers sont orientés l'un par rapport à l'autre de façon très précise, par exemple avec une précision inférieure à quelques minutes voire secondes d'arc. La précision de cette orientation détermine la qualité de la polarisation transmise. Cela permet d'obtenir un contraste élevé entre l'état passant et l'état bloquant.

Classiquement, les cristaux électro-optiques sont maintenus dans leur orientation respective par un support métallique, les cristaux électro-optiques étant séparés par une lame d'air. Les dispositifs électro-optiques sont souvent amenés à fonctionner sur de larges plages de température. Le support métallique est ainsi régulièrement sujet à des dilatations thermiques générant des contraintes sur les cristaux électro-optiques, ce qui peut modifier leur orientation ou leur indice de réfraction et donc dégrader le contraste du dispositif. De plus, le support métallique présente un encombrement conséquent alors que la place disponible pour le dispositif électro-optique est souvent réduite, par exemple dans un laser.

Dans les cristaux électro-optiques, l'application du champ électrique externe peut s'accompagner d'effets piézo-électriques générant des contraintes et des déformations dans les cristaux engendrant à leur tour une modification locale parasite des indices de réfraction par effet élasto-optique. A certaines fréquences de modulation, des phénomènes de résonance mécanique peuvent apparaître et empêcher le fonctionnement de la cellule de Pockels. Ces déformations dépendent de la direction des champs électriques externes et de la configuration du dispositif électro-optique, elles peuvent en outre être différentes pour les deux cristaux d'un dispositif électro-optique.

Des composants optiques peuvent être assemblés par différentes techniques. Une technique consiste à assembler les composants par contact optique. Cependant, le contact optique entre deux cristaux électro-optiques d'orientations différentes résiste mal à une gamme étendue de température du fait des différences de dilatations thermiques et de l'anisotropie des cristaux électro-optiques.

De tels dispositifs électro-optiques sont couramment utilisés dans des systèmes lasers dont la compacité est de plus en plus contraignante. Le besoin de composants de faible ouverture, par exemple millimétrique, est donc également de plus en plus important. Toutefois, plus les cristaux électro-optiques sont petits, plus il est difficile de les aligner précisément.

Il est donc apparu le besoin d'un dispositif électro-optique présentant un encombrement minimum et dans lequel les cristaux électro-optiques sont maintenus dans leur orientation tout en résistant à des contraintes mécaniques ou thermiques.

Un autre but de l'invention est de fournir un dispositif électro-optique présentant une faible ouverture.

Encore un autre but de l'invention est la production en série de dispositifs électro-optiques.

### PRESENTATION DE L'INVENTION

Dans ce contexte, on propose selon l'invention un dispositif électro-optique comprenant un premier cristal électro-optique, un second cristal électro-optique et au moins une couche de colle optiquement transparente, chaque cristal électro-optique présentant une face optique d'entrée et une face optique de sortie, la face optique de sortie du premier cristal électro-optique étant rendue solidaire de la face optique d'entrée du second cristal électro-optique par collage au moyen de ladite au moins une couche de colle, le premier cristal électro-optique et le second cristal électro-optique étant disposés dans une orientation déterminée l'un par rapport à l'autre et optiquement en série pour transmettre un faisceau lumineux par chacune des faces optiques.

Ainsi, grâce à la couche de colle, l'orientation déterminée des cristaux électro-optiques l'un par rapport à l'autre est assurée. Ici, « déterminée » signifie choisie, par exemple par le fabricant, pour présenter des propriétés particulières ou une application particulière. La colle étant optiquement transparente, elle n'atténue pas la lumière traversant le dispositif électro-optique. La colle empêche le dépôt de poussières sur les faces optiques collés. De façon générale, le collage permet d'éviter la pollution des interfaces air-cristal entre les deux cristaux. Le dispositif électro-optique est ainsi plus facile à nettoyer lorsqu'il est intégré dans un dispositif laser.

Avantageusement, la couche de colle présente une faible épaisseur et donc une faible résistance thermique, ce qui permet d'homogénéiser la température entre les deux cristaux.

De plus, le collage via les faces optiques permet de réduire ou d'éliminer un support métallique orientable pour chaque cristal, ce qui réduit l'encombrement du dispositif électro-optique qui est alors principalement limité par les dimensions des cristaux électro-optiques eux-mêmes. L'absence de support mécanique complexe ou la simplification du support se traduit par une réduction des contraintes mécaniques sur les cristaux électro-optiques.

Ce mode de fixation confère plus de liberté dans le positionnement des électrodes. Elles peuvent ainsi être placées de manière optimale, par exemple en géométrie transverse, de manière à : réduire la tension de commande, sélectionner une orientation pour laquelle le cristal est homogène et/ou est simple à faire croître, sélectionner les directions du champ électrique qui minimisent les résonances piézo-électriques et/ou sélectionner des axes de propagation de la lumière qui réduisent les effets des contraintes thermomécaniques.

Enfin, la colle permet de fixer des cristaux électro-optiques de nature et/ou d'orientation cristallographique différentes et ainsi de mettre en place des orientations qui avaient été écartées auparavant parce que trop critiques à aligner, par exemple des orientations non-critiques en température, par exemple pour les cristaux de titanyle-phosphate de potassium, ou des orientations très large bande pour des lasers femtoseconde.

Selon un aspect particulier de l'invention, le premier cristal électro-optique présente un axe diélectrique longitudinal, le second cristal électro-optique présente un axe diélectrique longitudinal, l'axe longitudinal du premier cristal électro-optique est parallèle à l'axe diélectrique longitudinal du second cristal électro-optique, et chaque face optique du premier cristal électro-optique est disposée transversalement à l'axe diélectrique longitudinal du premier cristal électro-optique et chaque face optique du second cristal électro-optique est disposée transversalement à l'axe diélectrique longitudinal du second cristal électro-optique.

Selon un aspect particulier de l'invention, le premier cristal électro-optique et le second cristal électro-optique sont de même longueur et réalisés dans un même matériau et montés en compensation thermique.

En effet, en utilisant deux cristaux jumeaux précisément alignés, la variation thermique de biréfringence de l'un est compensée par la variation thermique de biréfringence de l'autre. Les propriétés optiques du dispositif électro-optique sont alors conservées sur une large plage de température. Ces cristaux sont orientés de sorte que l'axe lent du premier cristal soit orthogonal à l'axe lent du second cristal. Par conséquent, l'axe rapide du premier cristal est orthogonal à l'axe rapide du second cristal. Ainsi, quelle que soit la température (à condition qu'elle soit identique pour les deux cristaux), le retard de phase accumulé dans le premier cristal est exactement compensé par le second. Autrement dit, la polarisation du faisceau en sortie est identique à la polarisation du faisceau en entrée quelle qu'elle soit et on s'affranchit donc de l'impact d'une variation de température.

La compensation thermique peut cependant être perdue lorsqu'un gradient de température se forme entre les cristaux. La couche de colle, agissant comme un pont thermique, permet de réduire les gradients de température entre les cristaux. L'absence de support, permise par la colle, réduit également les gradients de température entre les cristaux puisque le support peut comporter un gradient de température qui se communique aux cristaux par conduction.

Selon un autre aspect particulier, la colle est choisie dans le groupe constitué :
- des colles obtenues par un procédé sol-gel ;
- des colles inorganiques ;
- des colles organo-minérales.

La colle est alors obtenue par polymérisation inorganique de précurseurs moléculaires de type alkoxydes, et de préférence des alkylalkoxysilanes. Le procédé sol-gel permet ainsi d'obtenir des colles à base de silice dont les propriétés physico-chimiques sont modulables. Par exemple les propriétés mécaniques et optiques peuvent être optimisées en fonction des éléments optiques à coller.

Les colles organo-minérales présentent une partie minérale majoritaire avec une partie organique. La partie organique assure de bonnes propriétés mécaniques et d'adhésion grâce à l'apport de groupement fonctionnels. Ces colles sont adaptées pour adhérer sur des surfaces inorganiques y compris les métaux. De plus, elles peuvent être travaillées après durcissement, par exemple découpées ou polies, ce qui facilite l'industrialisation du dispositif électro-optique.

Selon un autre aspect particulier, le dispositif électro-optique comprend un élément optique transparent présentant une première face optique et une deuxième face optique, opposées l'une à l'autre, ladite au moins une couche de colle comprenant une première couche de colle et une deuxième couche de colle, et dans lequel la première face optique est fixée à la face optique de sortie du premier cristal électro-optique par la première couche de colle et la deuxième face optique est fixée à la face optique d'entrée du second cristal électro-optique par la deuxième couche de colle.

L'élément optique transparent permet de limiter les contraintes exercées sur les couches de colles lorsque les cristaux subissent des déformations. D'autres avantages de l'élément optique sont décrits ci-dessous.

Selon une variante, l'élément optique est fabriqué dans un matériau optiquement isotrope.

Ainsi, la polarisation de la lumière traversant le dispositif électro-optique n'est pas modifiée par l'élément optique.

Selon un aspect particulier de cette variante, chaque cristal électro-optique présente un axe diélectrique transverse orthogonal à l'axe diélectrique longitudinal et l'axe diélectrique transverse du premier cristal est orthogonal à l'axe diélectrique transverse du second cristal.

Selon une autre variante, l'élément optique est fabriqué dans un matériau biréfringent. L'élément optique fonctionne alors comme une lame d'onde modifiant la polarisation du faisceau lumineux.

Selon un aspect particulier de cette variante, l'élément optique forme un rotateur de polarisation à 90 degrés, chaque cristal électro-optique présente un axe diélectrique transverse orthogonal à l'axe diélectrique longitudinal et dans lequel l'axe diélectrique transverse du premier cristal est parallèle à l'axe diélectrique transverse du second cristal.

Les déformations piézo-électriques ou les gradients thermiques à l'intérieur des cristaux, se font alors selon les mêmes directions pour les deux cristaux. Le dispositif électro-optique est alors moins sensible à ces effets ce qui élargit ses conditions d'utilisation.

Selon encore une variante, le dispositif électro-optique comprend un moyen de maintien opto-mécanique de l'élément optique transparent.

Ceci permet de fixer le dispositif électro-optique de façon symétrique et centrale. La compensation thermique conférée par l'orientation des deux cristaux électro-optiques est ainsi conservée même lorsque le support transporte un flux thermique car les variations de température des deux cristaux sont longitudinales et symétriques. Inversement, lorsque la température des cristaux est élevée, la chaleur tend à se dissiper par l'intermédiaire de l'élément optique donc de façon longitudinale. La fixation centrale apporte un gain d'homogénéité du taux d'extinction sur l'ouverture du dispositif. Le maintien opto-mécanique par l'élément optique permet également de réduire l'encombrement du dispositif électro-optique.

Selon un autre aspect particulier de l'invention, le dispositif électro-optique comprend au moins une électrode s'étendant sur une face latérale du premier cristal et sur une face latérale du second cristal.

Les électrodes, classiquement au nombre de quatre (deux par cristal) génèrent un encombrement conséquent, notamment lorsque les deux cristaux sont orientés à 90 degrés. Avoir une électrode commune aux deux cristaux, par exemple celle reliée à la masse, permet de réduire l'encombrement du dispositif électro-optique. De préférence, le dispositif électro-optique comprend uniquement deux électrodes, chacune s'étendant sur une face de chaque cristal. Cela permet de réduire grandement l'encombrement du dispositif électro-optique, notamment en limitant le nombre de contacts électriques sur les électrodes.

Selon un autre aspect particulier et avantageux, chaque cristal présente deux faces latérales, parallèles entre elles et avec l'axe optique longitudinal, le dispositif électro-optique comprenant une électrode d'épaisseur inférieure à 200 µm déposée sur chacune desdites deux faces latérales.

La faible épaisseur des électrodes permet de réduire l'encombrement du dispositif électro-optique.

Selon encore un autre aspect particulier, les cristaux électro-optiques sont choisis dans le groupe constitué du : sphalérite, séléniure de soufre, tellurure de zinc, germanate de bismuth, arséniure de gallium, arséniure d'indium, phosphure de gallium, tellurure de cadmium, dihydrogéno-phosphate de potassium, dihydrogénophosphate d'ammonium, niobate de lithium, tantalate de lithium, beta-borate de baryum, dihydrogéno-phosphate de potassium deutéré, titanyle-phosphate de potassium, titanyle-phosphate de rubidium, titanyle-phosphate de d'arsenate, niobate de potassium, triborate de lithium.

La couche de colle permet en effet d'utiliser une grande variété de cristaux électro-optiques.

Selon un autre aspect particulier et avantageux, les faces optiques des cristaux électro-optiques présentent une surface inférieure à 100 mm², ou inférieure à 10 mm², ou inférieure à 5 mm² voire même inférieure à 1 mm².

Aligner précisément de petits cristaux électro-optiques est en pratique complexe. Cela est rendu possible grâce à la couche de colle, par exemple en alignant les cristaux pendant le durcissement de la couche de colle.

L'invention propose aussi un modulateur électro-optique comprenant un dispositif électro-optique tel que décrit ci-dessus.

L'invention propose enfin un procédé de fabrication d'un dispositif électro-optique tel que décrit ci-dessus, le procédé comprenant l'étape suivante :
e1) assemblage d'un dispositif électro-optique par collage d'un premier cristal électro-optique et d'un second cristal électro-optique disposés optiquement en série au moyen d'une colle transparente.

De préférence, le procédé comprend une étape e2) de découpe du dispositif électro-optique selon au moins une direction parallèle aux axes diélectriques longitudinaux en une pluralité de dispositifs électro-optiques.

Ce procédé de fabrication est particulièrement adapté à une production en série de dispositifs électro-optiques. En effet, il est possible de coller deux cristaux électro-optiques de taille importante et ensuite de découper l'ensemble en plusieurs dispositifs électro-optiques de taille inférieure. Avantageusement, l'étape d'orientation des cristaux électro-optiques est réalisée une seule fois pour l'ensemble des dispositifs électro-optiques de taille inférieure au lieu d'orienter séparément chaque dispositif électro-optique de taille inférieure. Les dispositifs électro-optiques obtenus après découpe ont tous, par construction, la même orientation et les mêmes propriétés électro-optiques.

De plus, réaliser des dispositifs électro-optiques de petite taille, par exemple avec une ouverture inférieure à 5 mm², est complexe. Il est en effet difficile d'aligner de petits cristaux électro-optiques. Ce procédé de fabrication permet de réaliser facilement des dispositifs électro-optiques de petite taille puisque l'alignement est effectué uniquement sur deux cristaux de taille importante.

La description qui va suivre en regard des dessins annexés, donnés à titre d'exemples non limitatifs, fera bien comprendre en quoi consiste l'invention et comment elle peut être réalisée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

Sur les dessins annexés :
La figure 1 est une représentation schématique en perspective d'un dispositif électro-optique selon un premier mode de réalisation ;
La figure 2 est une représentation schématique en perspective d'un dispositif électro-optique selon le premier mode de réalisation comprenant des électrodes et un socle ;
La figure 3 est une représentation schématique en perspective d'un dispositif électro-optique selon un deuxième mode de réalisation ;
La figure 4 est une représentation schématique en perspective d'un dispositif électro-optique selon le deuxième mode de réalisation comprenant des électrodes et un socle ;
La figure 5 est une illustration schématique des flux de chaleur au sein d'une variante du dispositif électro-optique selon un deuxième mode de réalisation ;
La figure 6 est une illustration schématique d'une première étape d'un procédé de fabrication d'un dispositif électro-optique selon le deuxième mode de réalisation ; et
La figure 7 est une illustration schématique d'une deuxième étape d'un procédé de fabrication d'une pluralité de dispositifs électro-optiques.

Bien entendu, diverses autres modifications peuvent être apportées à l'invention dans le cadre des revendications annexées.

Il est à noter que sur ces figures les éléments structurels et/ou fonctionnels communs aux différentes variantes peuvent présenter les mêmes références. Il est également à noter que les dispositifs électro-optiques représentés sur les figures ne sont qu'un exemple particulier dans lequel les cristaux électro-optiques sont des cristaux de rubidium titanyle phosphate (appelé par la suite RTP). Les orientations des axes diélectriques X, Y, Z sont donc ceux du RTP. Néanmoins, comme décrit par la suite, de nombreux autres matériaux et de nombreuses autres orientations sont envisageables.

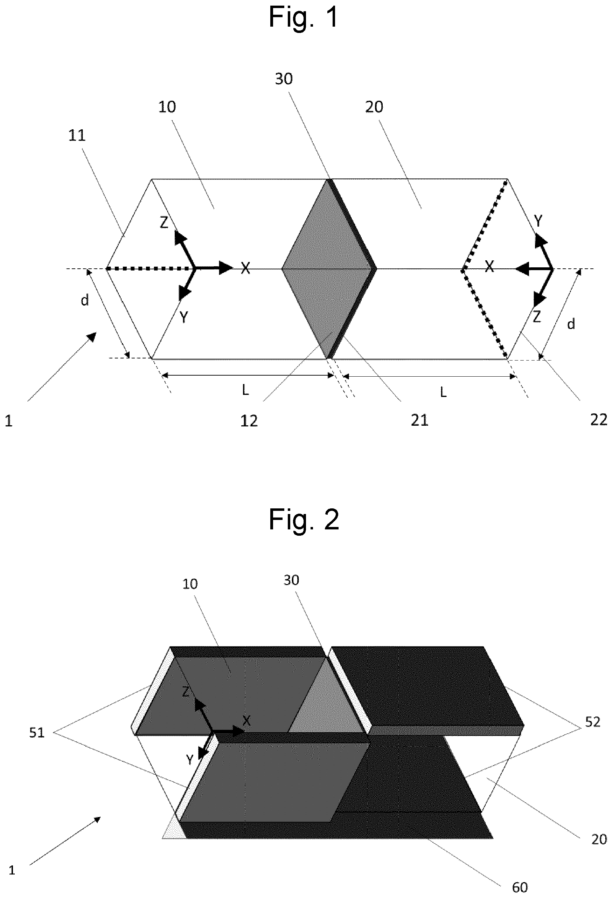

Un dispositif électro-optique selon l'invention, tel que représenté à la figure 1 et désigné dans son ensemble par la référence 1, comprend un premier cristal électro-optique 10, un second cristal électro-optique 20 et une couche de colle 30. Pour faciliter la lecture, les cristaux électro-optiques 10, 20 sont par la suite simplement nommés cristaux 10, 20.

Les figures 1 et 2 illustrent un dispositif électro-optique 1 selon un premier mode de réalisation dans lequel le premier cristal 10 est fixé au second cristal 20 par l'intermédiaire d'une seule couche de colle 30.

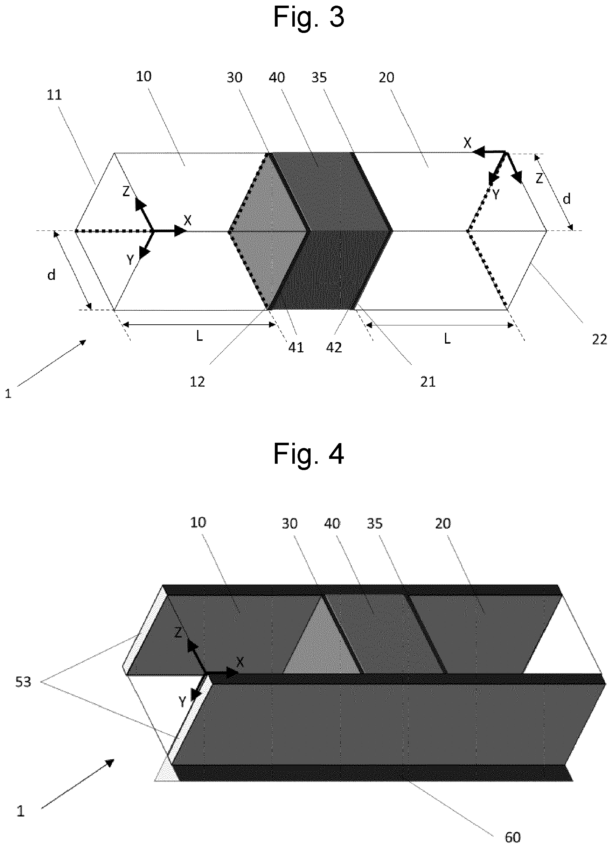

Les figures 3 et 4 illustrent un dispositif électro-optique 1 selon un deuxième mode de réalisation dans lequel un élément optique transparent 40 est disposé entre le premier cristal 10 et le second cristal 20, le premier cristal 10, respectivement le second cristal 20 étant fixé à l'élément optique 40 par l'intermédiaire d'une première couche de colle 30, respectivement d'une deuxième couche de colle 35.

Quel que soit le mode de réalisation, chaque cristal 10, 20 présente trois axes X, Y, Z. Ici, les trois axes X, Y, Z sont des axes diélectriques. Ici, chaque cristal 10, 20 présente un axe diélectrique longitudinal X. Ici, l'axe diélectrique longitudinal X d'un cristal 10, 20 est l'axe diélectrique dirigé vers l'autre cristal 10, 20. Dans les exemples représentés sur les figures 1 à 4, l'axe diélectrique longitudinal X est aussi l'axe parallèle à l'axe de propagation d'un faisceau lumineux lors de l'utilisation du dispositif électro-optique 1.

Comme le montrent plus particulièrement les figures 1 et 3, l'axe diélectrique longitudinal X du premier cristal 10 est ici parallèle à l'axe diélectrique longitudinal X du second cristal 20. Ici, les deux cristaux 10, 20 sont disposés optiquement en série pour transmettre un faisceau lumineux (non représenté) suivant les axes diélectriques longitudinaux X.

Ici, chaque cristal 10, 20 présente aussi un premier axe transverse Y et un second axe transverse Z. Dans les modes de réalisation représentés sur les figures, pour chaque cristal 10, 20, les trois axes diélectriques X, Y, Z sont orthogonaux entre eux.

Dans le cas du RTP et du titanyle-phosphate de potassium (KTP), cristaux optiquement biaxes de structure orthorhombique, les axes diélectriques correspondent aux axes respectivement cristallographiques, nommés « a », « b » et « c », ainsi qu'aux axes optiques principaux, nommés « x », « y » et « z » selon la nomenclature habituelle. Dans d'autres structures cristallines, ces correspondances peuvent être différentes.

Chaque cristal 10, 20 présente une face optique d'entrée 11, 21 et une face optique de sortie 12, 22. Les termes « entrée » et « sortie » font ici référence à la propagation d'un faisceau lumineux à travers le dispositif électro-optique 1. Le faisceau lumineux traverse chaque cristal 10, 20 en allant de la face d'entrée 11, 21 à la face de sortie 12, 22. Autrement dit, la face d'entrée 11 et la face de sortie 12 du premier cristal électro-optique 10 sont opposées. De même, la face d'entrée 21 et la face de sortie 22 du second cristal électro-optique 20 sont opposées.

Chaque face optique 11, 12, 21, 22 est ici disposée transversalement à l'axe diélectrique longitudinal X. Cela signifie ici que chaque face optique 11, 12, 21, 22 est orthogonale à l'axe diélectrique longitudinal X. Cela peut aussi signifier que chaque face optique est généralement orthogonale à l'axe diélectrique longitudinal. Dans certains cas particuliers, les faces optiques sont taillées à l'angle d'incidence de Brewster par exemple.

L'épaisseur d'une couche de colle, dans la direction de l'axe diélectrique longitudinal X, est comprise entre 1 µm et 5 mm. L'épaisseur de la couche de colle est de préférence inférieure à 40 µm.

Dans les deux modes de réalisation illustrés sur les figures 1 à 5, la colle est optiquement transparente. De façon générale, la colle ne modifie ni l'amplitude, ni la phase, ni le contenu spectral du faisceau lumineux la traversant. La colle est ici optiquement transparente sur une plage de longueurs d'onde correspondant à la plage de longueurs d'onde d'utilisation du dispositif électro-optique 1.

Optiquement transparente signifie par exemple qu'une couche de colle présente une transmission supérieure à 99 % et de préférence supérieure à 99,9 %. La transparence de la colle permet de minimiser les pertes d'insertions et de limiter l'absorption et l'échauffement du dispositif électro-optique 1. Pour certaines applications extra-cavité, par exemple de sélecteur d'impulsion, où la haute puissance laser n'est pas nécessaire, optiquement transparente signifie que la transmission de la couche de colle est supérieure à 70 % ou 80 %.

La transparence de la couche de colle dépend ici de l'application visée pour le dispositif électro-optique 1 : plus la puissance est importante, plus la transparence de la colle doit être élevée. Ici les possibles traitements anti-reflets des cristaux 10, 20, et/ou de l'élément optique 40, sont adaptés à l'indice optique de la colle afin de limiter les réflexions parasites pouvant dégrader les performances du dispositif électro-optique 1. Pour des impulsions laser en régimes picoseconde ou femtoseconde, les réflexions parasites sont maîtrisées sur une large bande spectrale. De plus, la colle ne se dégrade pas lors du passage du faisceau lumineux.

De préférence, la colle est électriquement isolante. Cela permet d'éviter les phénomènes d'arc électrique et de court-circuit entre les électrodes des faces opposées.

La colle est par exemple obtenue par un procédé sol-gel. Un procédé sol-gel comprend deux étapes réactionnelles pouvant être concomitantes. Comme décrit dans les documents WO 9425406 et US 2002120660, dans une première étape, des alkoxydes métalliques ou de silicium (M-(OR)x, où R est une chaine carbonée, M un ion métallique ou le silicium et x un nombre entier positif), ou des alkylalkoxysilanes (F-R')a(R")bSi(OR)4-(a+b), où R est une chaine carbonée, R' et R" sont des chaines carbonées avec ou sans hétéroatomes, F un groupe fonctionnel et (a+b) inférieur ou égale à 2, avec 0≤a≤2 ; 0≤b≤2, a et b étant des entiers, sont hydrolysés, en présence d'un solvant. Le methyltrimethoxysilane, le methyltriethoxysilane, l'ethyltriethoxysilane, le dimethyldimethoxysilane, le dimethyldiethoxysilane, le diethoxymethylsilane, le phenyltriethoxysilane ou le vinyltriethoxysilane sont des exemples d'alkylalkoxysilanes utilisés pour préparer des colles sol-gels. L'hydrolyse peut être, par exemple, réalisée par une solution aqueuse acide. L'hydrolyse est suivie d'une réaction de condensation entre les espèces hydrolysées conduisant à la formation de ponts, M-O-M ou de ponts siloxanes dans le cas d'alkoxysilanes ou d'alkylalkoxysilanes. Cette étape conduit à une solution colloïdale constituée de particules d'oxydes métalliques ou à base de silice plus ou moins denses en suspensions dans un solvant. Ce dernier peut être éliminé en partie ou totalement pour optimiser les propriétés rhéologiques de la colle. Lors de la mise en oeuvre de la colle les particules réagissent entre elles notamment par des réactions de condensation pour former un réseau tridimensionnel solide et transparent. Le traitement thermique de la colle se fait de préférence à une température inférieure à la température de dégradation de la partie organique lorsque cette dernière est présente.

Le métal est par exemple choisi dans le groupe comprenant le zirconium, le titane, l'aluminium, l'hafnium. Le groupe carboné R est par exemple un alkyle comprenant 1 à 7 atomes de carbones et x vaut par exemple 3 ou 4. Les alkoxydes utilisés peuvent aussi par exemple être ceux du type (RO)3-Si-O-AI-(OR')2 ou R"-Si-(OR)4-z ou des mélanges de ces alkoxydes.

De plus, la colle est ici conçue pour résister à des températures négatives très basses, par exemple au moins jusqu'à -50° C. Ici, la colle obtenue par voie sol-gel présente une stabilité mécanique, chimique et thermique, de -50°C à +70 °C, compatible avec des utilisations électro-optiques spatiales et militaires et des étapes de fabrication telles que le polissage, la découpe ou le nettoyage. La partie minérale assure, en outre, la dureté nécessaire lors de l'utilisation du dispositif électro-optique.

En variante, la colle peut être une colle inorganique ou une colle organo-minérale. Par exemple la colle peut être une résine époxy. Le type de colle est ici adapté en fonction des matériaux à coller ou encore de l'épaisseur de colle désirée.

Comme le montrent bien les figures 1 à 4, les cristaux sont montés de préférence en configuration de compensation thermique, le dispositif électro-optique 1 fonctionne donc sur une large plage de température, par exemple de -50° C à +70° C. Pour cela, les cristaux 10, 20 sont de même longueur, notée L, selon l'axe longitudinal diélectrique X. Ils sont également réalisés dans le même matériau. Enfin, les axes optiques longitudinaux X sont orientés en sens mutuellement opposés. Ici par exemple, comme représenté en figure 1, chaque axe longitudinal X est orienté vers la couche de colle 30, c'est-à-dire vers le centre du dispositif électro-optique 1. De façon avantageuse, les cristaux 10, 20 sont de même épaisseur, notée d, selon leur second axe diélectrique transverse Z respectif, c'est-à-dire entre chaque paire d'électrodes 51, 52. De tels cristaux sont couramment appelés des cristaux jumeaux.

Par exemple, pour des cristaux optiquement uniaxes de structure quadratique du groupe ponctuel 4 barre 2m, comme le dihydrogéno-phosphate de potassium (KDP), les électrodes peuvent être disposées sur des faces latérales perpendiculaires au second axe diélectrique transverse Z et la direction du faisceau lumineux peut être orientée selon la plus grande longueur à 45 degrés de l'axe diélectrique longitudinal X et du premier axe diélectrique transverse Y.

En variante, la compensation thermique peut aussi être obtenue en dirigeant le faisceau lumineux dans des directions pour lesquelles la biréfringence ne dépend pas de la température. Les tensions de modulation sont généralement différentes des tensions pour lesquelles le faisceau est dirigé parallèlement aux axes diélectriques. Dans le cas du KTP ou RTP, cette orientation particulière implique une tension environ quatre fois supérieure. Dans le cas du niobate de potassium (KNbO₃), la tension est notablement inférieure. Dans tous les cas, la tolérance angulaire du dispositif est nettement plus réduite.

Dans les exemples représentés, chaque cristal 10, 20 présente une forme globalement parallélépipédique. Chaque cristal 10, 20 présente donc quatre faces latérales (non référencées), parallèles deux à deux, et orthogonales aux faces optiques 11, 12, 21, 22. Ici, chaque cristal 10, 20 présente sensiblement une forme de parallélépipède rectangle.

Avantageusement, l'ouverture optique du dispositif électro-optique 1 peut être petite. Petite signifie ici que chaque face optique 11, 12, 21, 22 présente une surface inférieure à 100 mm² et de préférence inférieur à 5 mm². Ici, toutes les faces optiques 11, 12, 21, 22 du dispositif électro-optique 1 sont identiques. Chaque face optique 11, 12, 21, 22 est par exemple un carré de 10 mm de large, ou un rectangle de 3 mm sur 5 mm, dont les côtés sont orientés parallèlement aux axes diélectriques transverses Y, Z. En variante, l'ouverture optique du dispositif électro-optique peut être supérieure à 1 cm².

Selon l'axe diélectrique longitudinal X, les cristaux 10, 20 présentent une longueur L comprise en 1 mm et 10 cm, généralement entre 5 mm et 20 mm.

Comme illustré en figure 2 et 4, les cristaux électro-optiques 10, 20 sont ici utilisés en configuration électrique transverse, le champ électrique étant appliqué transversalement à l'axe diélectrique longitudinal X, c'est-à-dire ici transversalement à la direction de propagation du faisceau lumineux à travers le dispositif électro-optique 1. Sur la figure 2, pour chaque cristal 10, 20, le champ électrique est par exemple appliqué selon le second axe diélectrique transverse Z.

Sur la figure 2, des électrodes 51, 52 sont vues en transparences à travers les cristaux 10, 20. Les électrodes 51, 52 sont alors disposées sur les faces latérales des cristaux 10, 20. Les cristaux électro-optiques 10, 20 sont ici disposés sur un socle 60 qui les supporte. Ici, le socle 60 est par exemple réalisé en matériau conducteur et relié à la masse. Une électrode de chaque paire d'électrode 51,52 est ici reliée au socle 60. Les deux autres électrodes des deux paires d'électrode 51, 52 sont isolées électriquement l'une par rapport à l'autre. Un générateur de tension électrique est relié à chaque paire d'électrodes pour appliquer une tension électrique. On applique la même tension électrique sur chaque cristal.

La colle permet d'utiliser une grande variété de cristaux électro-optiques. La colle permet de fixer les cristaux 10, 20 directement l'un à l'autre, comme dans le premier mode de réalisation, ou de fixer chaque cristal 10, 20 à l'élément optique transparent 40, comme dans le deuxième mode de réalisation.

Dans le premier mode de réalisation représenté en figures 1 et 2, la face optique de sortie 12 du premier cristal 10 est collée par la couche de colle 30 à la face optique d'entrée 21 du second cristal 20. Le premier cristal 10 et le second cristal 20 sont donc rendus solidaires au moyen seulement de la couche de colle 30.

Dans ce premier mode de réalisation, le premier axe diélectrique transverse Y du premier cristal 10 est orthogonal au premier axe diélectrique transverse Y du second cristal 20. Le second axe diélectrique transverse Z du premier cristal 10 est aussi orthogonal au second axe diélectrique transverse Z du second cristal 20.

Le champ électrique externe est appliqué via des électrodes 51, 52. Ici, une paire d'électrodes 51, 52 enserre chaque cristal 10, 20 de manière à le prendre en sandwich selon la direction du second axe diélectrique transverse Z. Comme illustré sur la figure 2, les deux électrodes d'une paire d'électrode 51, 52 sont donc disposées sur deux faces latérales, parallèles entre elles et orthogonales avec l'axe diélectrique longitudinal X. Les paires d'électrodes 51, 52 sont orientées à 90 degrés l'une de l'autre. De préférence, une épargne (non représentée) est aménagée à chaque coin d'électrode pour éviter un court-circuit électrique.

Dans ce premier mode de réalisation, le dispositif électro-optique 1 comprend ainsi quatre électrodes 51, 52. La tension de commande peut être appliquée à chaque paire d'électrode 51, 52 grâce à un circuit électrique dédié.

Les électrodes 51, 52 sont formées dans une pièce métallique et collées à l'aide d'une colle conductrice sur les faces latérales des cristaux 10, 20. Les électrodes 51, 52 sont par exemple en or. Ici, l'épaisseur des électrodes 51, 52, c'est-à-dire leur dimension selon le second axe diélectrique transverse Z est inférieure à 400 µm. De préférence, l'épaisseur des électrodes 51, 52, est inférieure à 200 µm. En variante, les électrodes peuvent être déposées par une technique de dépôt sous vide sur les faces latérales des cristaux 10, 20.

Dans le deuxième mode de réalisation représenté en figures 3, 4 et 5, le dispositif électro-optique 1 comprend l'élément optique transparent 40.

De la même manière que les cristaux 10, 20, l'élément optique transparent 40 présente une première face optique 41 et une deuxième face optique 42, parallèles entre elles et orthogonales, ou sensiblement orthogonales, à quelques degrés près, à l'axe diélectrique longitudinal X. Dans l'exemple représenté en figures 3 et 4, l'élément optique 40 présente aussi quatre faces latérales s'étendant dans le prolongement des faces latérales des cristaux 10, 20.

Transparent signifie ici que l'élément optique 40 n'atténue pas ou peu le faisceau lumineux le traversant. Pour cela, l'élément optique 40 est par exemple réalisé en silice, en quartz ou en diamant. L'élément optique 40 améliore l'isolation électrique des électrodes 51, 52 par rapport au premier mode de réalisation en les éloignant les unes des autres.

Comme le montre bien la figure 3, le dispositif électro-optique 1 comprend en outre une deuxième couche de colle 35 optiquement transparente et électriquement isolante. La deuxième couche de colle 35 est ici réalisée avec la même colle et par le même procédé que la couche de colle 30, ci-après appelée première couche de colle 30.

Dans ce deuxième mode de réalisation, la face optique de sortie 12 du premier cristal 10 est fixée à la première face optique 41 de l'élément optique 40 par la première couche de colle 30 et la deuxième face optique 42 de l'élément optique 40 est fixée à la face optique d'entrée 21 du second cristal 20 par la deuxième couche de colle 35.

Dans l'exemple illustré en figure 3 et 4, l'élément optique 40 est réalisé dans un matériau biréfringent.

Dans un exemple de réalisation, l'élément optique 40 est plus particulièrement un rotateur de polarisation à 90 degrés (représenté par la même référence 40). Il permet donc de faire tourner de 90 degrés la polarisation du faisceau lumineux se propageant selon l'axe diélectrique longitudinal X.

Grâce au rotateur de polarisation à 90 degrés, l'orientation respective des cristaux 10, 20 l'un par rapport à l'autre est modifiée, tout en restant en compensation thermique. Ici, le second axe diélectrique transverse Z du premier cristal 10 est parallèle au second axe diélectrique transverse Z du second cristal 20. Le sens des axes Z est opposé. De même, les premiers axes diélectriques Y des deux cristaux 10, 20 sont parallèles.

Les deux paires d'électrodes peuvent alors être parallèles entre elles. En d'autres termes, les deux paires d'électrodes peuvent être alignées suivant deux plans parallèles et non pas à 90 degrés comme dans le premier mode de réalisation. Cela permet de rendre dispositif électro-optique 1 plus compact. De plus, dans cette configuration, la compensation thermique présente alors une large tolérance angulaire et le dispositif électro-optique 1 peut fonctionner avec un faisceau lumineux relativement divergent.

Avantageusement, certaines orientations obliques de cristaux du groupe ponctuel 4 barre 2m permettent à la fois la compensation thermique et des électrodes parallèles sans nécessiter de rotateur de polarisation à 90 degrés, la tension de modulation est toutefois élevée.

Le rotateur de polarisation à 90 degrés permet aussi de mettre les électrodes en commun entre les deux cristaux 10, 20. Comme le montre la figure 4, le dispositif électro-optique 1 comprend alors une seule paire d'électrodes (dont la référence est alors notée 53). Chaque électrode de la paire d'électrodes 53 est ici plane. Chaque électrode de la paire d'électrodes 53 s'étend alors sur une face latérale du premier cristal 10, sur une face latérale de l'élément optique 40 et sur une face latérale du second cristal 20. Cela permet de réduire encore la compacité du dispositif électro-optique 1. Une des deux électrodes 53 peut être fixée à un socle 60. Une deux électrodes 53 peut par exemple être reliée électriquement à la masse.

L'épaisseur de l'élément optique 40, ici sa dimension selon l'axe diélectrique longitudinal X, est par exemple comprise entre 100 µm et 50 mm. Lorsque l'ouverture de l'élément optique 40 est supérieure à l'ouverture des cristaux 10, 20, l'épaisseur de l'élément optique 40 est de préférence comprise entre 200 µm et 1 mm. Cette épaisseur permet par exemple d'empêcher les arcs entre les électrodes de deux cristaux de RTP montés en compensation thermique. Lorsque l'élément optique 40 est un rotateur de polarisation, son épaisseur peut dépendre de l'angle de rotation désiré.

Dans les cristaux biaxes, de la même manière qu'il existe des orientations, appelées « hors-axes », respectives des cristaux dans lesquelles le faisceau ne se propage pas le long d'un axe diélectrique et pour lesquelles les coefficients thermo-optiques apparents sont les mêmes, il existe également des orientations pour lesquelles les vitesses de groupes sont égales. Ces orientations confèrent une tolérance spectrale très large au dispositif électro-optique 1, ce qui est très avantageux pour les impulsions large bande des lasers picoseconde et femtoseconde. Ces orientations ne coïncident pas en général aux orientations correspondant aux très larges tolérances en température.

Le corolaire de ces propriétés de tolérance en température ou en longueur d'onde est une très grande sensibilité angulaire absolue. L'orientation absolue des cristaux par rapport au faisceau doit être très précise. Cependant, en montant deux cristaux en compensation d'angle de biréfringence, plus connue sous le nom de « walk-off » spatial, il est possible d'annuler la criticité angulaire au premier ordre pour obtenir un dispositif électro-optique facile d'emploi. Cette orientation relative des deux cristaux très précise est rendue possible par le collage.

Le choix de directions réalisant l'égalité des vitesses de groupe permet de compenser la dispersion à l'ordre un. En fonction de l'utilisation du dispositif électro-optique 1, l'élément optique 40 peut aussi permettre de compenser les ordres plus élevés de dispersion chromatique des cristaux 10, 20. Inversement, la dispersion chromatique des cristaux 10, 20 peut aussi être accentuée, par exemple dans un filtre spectral en polarisation.

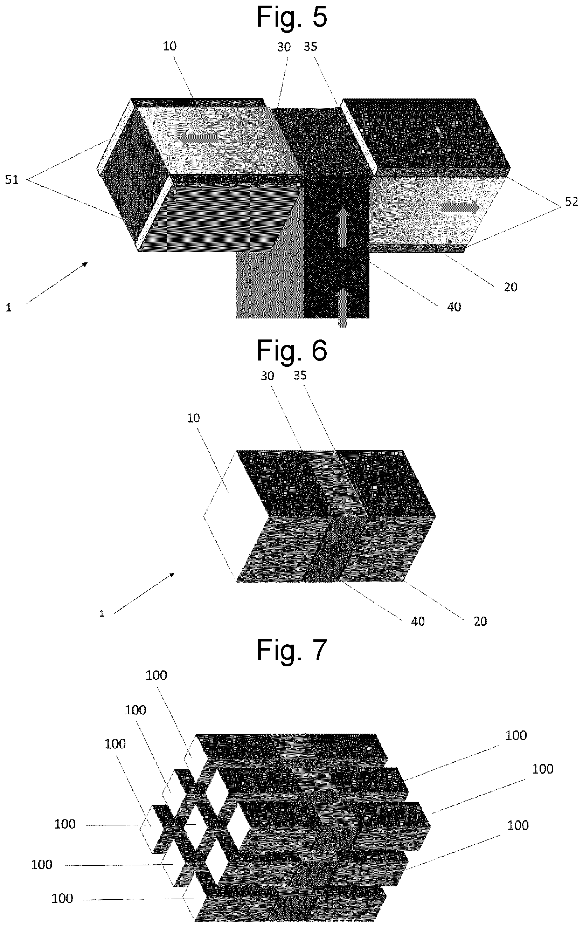

Dans une variante du deuxième mode de réalisation représentée en figure 5, l'élément optique 40 est réalisé dans un matériau optiquement isotrope. Dans ce cas, comme dans le premier mode de réalisation, les deux cristaux 10, 20 sont de préférence orientés à 90 degrés en polariseurs croisés, c'est-à-dire avec le premier axe diélectrique transverse Y du premier cristal 10 orthogonal au premier axe diélectrique transverse Y du second cristal 20. Les deux paires d'électrodes 51, 52 sont alors orientées à 90 degrés l'une de l'autre.

De façon générale, la figure 5 illustre un exemple de maintien opto-mécanique du dispositif électro-optique 1 par l'élément optique 40. Pour cela l'élément optique 40 comprend un moyen de maintien opto-mécanique. Le moyen de maintien opto-mécanique comporte par exemple un logement pour une vis. Sur la figure 5, le moyen de maintien opto-mécanique comporte ici un prolongement de l'élément optique 40 dans une direction perpendiculaire à l'axe diélectrique longitudinal X. Ce prolongement peut ensuite être utilisé pour maintenir le dispositif électro-optique 1.

La figure 5 illustre plus particulièrement par des flèches les échanges thermiques au sein du dispositif électro-optique 1. Sur les exemples des figures 2 et 4, un gradient thermique longitudinal au niveau du socle 60 génère aussi un gradient thermique longitudinal d'un cristal à l'autre, ce qui peut nuire à la compensation thermique du dispositif électro-optique 1.

Dans l'exemple de la figure 5, lorsque le support (non représenté) du dispositif électro-optique 1 subit un gradient thermique, par exemple longitudinal, la chaleur se diffuse de l'élément optique 40 vers les cristaux 10, 20. Grâce au maintien opto-mécanique par l'élément optique 40, le flux thermique se propage sensiblement longitudinalement dans chaque cristal 10, 20 et de façon symétrique par rapport à un plan de symétrie des deux cristaux jumeaux 10, 20. La compensation thermique peut alors être conservée malgré de forts gradients thermiques. De plus, l'élément optique 40 peut également jouer un rôle de régulation thermique des cristaux, par exemple pour maintenir les cristaux 10, 20 à une température déterminée.

Pour cela, l'élément optique 40 présente de préférence une forte conductivité thermique, comme par exemple le YAG blanc : 14 W/m/K ; le saphir : 35 W/m/K ; ou le diamant : 2200 W/m/K. Cela permet par exemple de drainer vers une monture refroidie la chaleur absorbée dans les cristaux à forte puissance laser. En variante, l'élément optique 40 peut présenter une faible conductivité thermique, comme par exemple la silice : 1.4W/m/K. Cela permet d'isoler thermiquement les cristaux du support.

De plus, pour limiter les contraintes mécaniques, l'élément optique 40 présente de préférence une faible dilatation thermique, comme par exemple la silice : 0.55×10⁻⁶K⁻¹ ; le quartz : 6×10⁻⁶K⁻¹ à 12×10⁻⁶K⁻¹ suivant les axes ; ou le RTP 0.5×10⁻⁶K⁻¹ à 16×10⁻⁶K⁻¹ suivant les axes.

En variante, lorsque le dispositif électro-optique comprend un rotateur à 90 degrés, le dispositif électro-optique peut comprendre trois électrodes. Par exemple, une électrode commune aux deux cristaux, reliée à la masse, joue le rôle de support pour les cristaux. Une électrode est ensuite disposée sur chaque cristal, à l'opposé de l'électrode commune, uniquement sur une face latérale de chaque cristal.

Les figures 6 et 7 représentent deux étapes d'un procédé de fabrication d'une pluralité de dispositifs électro-optiques (tous représentés par la même référence numérique 100) tels que décrits précédemment. Le procédé est ici illustré dans le cas de la fabrication de dispositifs électro-optiques 100 conformes au deuxième mode de réalisation, c'est-à-dire lorsque ces derniers comprennent un élément optique transparent 40. Il est évident que ce procédé de fabrication peut être appliqué à la fabrication de dispositifs électro-optiques 100 conformes au premier mode de réalisation ou à toute autre variante de ces modes de réalisation.

Comme le montre la figure 6, le procédé comprend une étape e1) d'assemblage d'un dispositif électro-optique 1 comprenant deux cristaux électro-optiques 10, 20, par collage de ces deux cristaux 10, 20 au moyen d'une colle. Ici, comme décrit précédemment en références aux figures 3 et 4, une face optique de chaque cristal 10, 20 est fixée à l'élément optique transparent 40 par une couche de colle.

Ici, les dimensions, dans le plan orthogonal à l'axe longitudinal, du dispositif électro-optique 1 assemblé à l'étape e1) sont supérieures aux dimensions des dispositifs électro-optiques 100 qui seront formés. Les dimensions du dispositif électro-optique 1 assemblé à l'étape e1) sont prédéterminées en fonction des dimensions des dispositifs électro-optiques 100 qui seront formés.

Ainsi, par exemple, le dispositif électro-optique 1 peut présenter une ouverture de 10 mm par 10 mm pour former des dispositifs électro-optiques 100 d'ouverture 2 mm par 2 mm.

De façon avantageuse, comme le montre la figure 7, le procédé comprend une étape e2) de découpe du dispositif électro-optique 1 assemblé à l'étape e1), selon au moins une direction parallèle à l'axe diélectrique longitudinal. La découpe permet de former la pluralité de dispositifs électro-optiques 100. Ici, la découpe peut être réalisée mécaniquement, par laser ou par jet d'eau.

Comme cela ressort de la figure 7, la découpe est réalisée selon deux directions orthogonales entre elles. Ici, chaque direction de découpe est orthogonale à l'un des axes diélectriques transverses Y, Z des cristaux 10, 20 assemblés à l'étape e1). Comme illustré en figure 7, lorsque des cristaux 10, 20 de 6 mm par 6 mm d'ouverture sont assemblés à l'étape e1), l'étape e2) aboutie par exemple à la fabrication de neuf dispositifs électro-optiques 100 de 2 mm par 2 mm d'ouverture. Pour cela, deux découpes sont réalisées selon chaque direction de découpe.

Le procédé comprend aussi une étape e3) (non représentée) dans laquelle des électrodes sont disposées sur les faces latérales des cristaux des dispositifs électro-optiques 1, 100.

Lorsque les seconds axes diélectriques transverses Z des deux cristaux 10, 20 sont orthogonaux, par exemple comme dans le premier mode de réalisation illustré sur les figures 1 et 2, l'étape e3) a de préférence lieu après l'étape de découpe e2).

Lorsque les seconds axes diélectriques transverses Z des deux cristaux 10, 20 sont parallèles, par exemple comme dans le deuxième mode de réalisation illustré sur les figures 3 et 4, l'étape e3) a de préférence lieu avant l'étape de découpe e2). Ainsi, les électrodes sont déposées sur toute la longueur du dispositif électro-optique 1 assemblé à l'étape e1), puis découpées.

La mise en oeuvre du dispositif électro-optique 1, 100 permet de réaliser des cellules de Pockels. De telles cellules de Pockels présentent alors un encombrement minimum et résistent à des contraintes mécaniques ou thermiques ou à des déformations. La mise en oeuvre du dispositif électro-optique 1, 100 permet également de réaliser des modulateurs de phase ou d'amplitude présentant les avantages décrits ci-dessus.

L'invention trouve aussi des applications dans la fabrication d'un modulateur électro-optique de phase intégrant un dispositif électro-optique 1, 100 selon l'un des modes de réalisation décrits.

## Revendications

1. Dispositif électro-optique (1, 100) comprenant un premier cristal électro-optique (10), un second cristal électro-optique (20) et au moins une couche de colle (30, 35) optiquement transparente, une face optique d'entrée (11, 21) et une face optique de sortie (12, 22), la face optique de sortie (12) du premier cristal électro-optique (10) étant rendue solidaire de la face optique d'entrée (21) du second cristal électro-optique (20) par collage au moyen de ladite au moins une couche de colle (30, 35), le premier cristal électro-optique (10) et le second cristal électro-optique (20) étant disposés dans une orientation déterminée l'un par rapport à l'autre et optiquement en série pour transmettre un faisceau lumineux par chacune des faces optiques (11, 12, 21, 22),
**caractérisé en ce que** les cristaux électro-optiques (10, 20) sont choisis dans le groupe constitué du : sphalérite, séléniure de soufre, tellurure de zinc, germanate de bismuth, arséniure de gallium, arséniure d'indium, phosphure de gallium, tellurure de cadmium, dihydrogéno-phosphate de potassium, dihydrogénophosphate d'ammonium, niobate de lithium, tantalate de lithium, beta-borate de baryum, dihydrogéno-phosphate de potassium deutéré, titanyle-phosphate de potassium, titanyle-phosphate de rubidium, titanyle-phosphate de d'arsenate, niobate de potassium, triborate de lithium.

2. Dispositif électro-optique (1, 100) selon la revendication 1, dans lequel le premier cristal électro-optique (10) présente un axe diélectrique longitudinal (X), le second cristal électro-optique (20) présente un axe diélectrique longitudinal (X), l'axe diélectrique longitudinal (X) du premier cristal électro-optique (10) étant parallèle à l'axe diélectrique longitudinal (X) du second cristal électro-optique (20), et dans lequel chaque face optique (11, 12) du premier cristal électro-optique (10) est disposée transversalement à l'axe diélectrique longitudinal (X) du premier cristal électro-optique (10) et chaque face optique (21, 22) du second cristal électro-optique (20) est disposée transversalement à l'axe diélectrique longitudinal (X) du second cristal électro-optique (20).

3. Dispositif électro-optique (1, 100) selon l'une des revendications 1 à 2, dans lequel le premier cristal électro-optique (10) et le second cristal électro-optique (20) sont de même longueur et réalisés dans un même matériau et montés en compensation thermique,

4. Dispositif électro-optique (1, 100) selon l'une des revendications 1 à 3, dans lequel la colle est choisie dans le groupe constitué :
- des colles obtenues par un procédé sol-gel ;
- des colles inorganiques ;
- des colles organo-minérales.

5. Dispositif électro-optique (1, 100) selon l'une des revendications 1 à 4, comprenant un élément optique (40) transparent présentant une première face optique (41) et une deuxième face optique (42), ladite au moins une couche de colle (30, 35) comprenant une première couche de colle (30) et une deuxième couche de colle (35), et dans lequel la première face optique (41) est fixée à la face optique de sortie (12) du premier cristal électro-optique (10) par la première couche de colle (30) et la deuxième face optique (42) est fixée à la face optique d'entrée (21) du second cristal électro-optique (20) par la deuxième couche de colle (35).

6. Dispositif électro-optique (1, 100) selon la revendication 5, dans lequel l'élément optique (40) est fabriqué dans un matériau optiquement isotrope.

7. Dispositif électro-optique (1, 100) selon la revendication 5, dans lequel l'élément optique (40) est fabriqué dans un matériau biréfringent.

8. Dispositif électro-optique (1, 100) selon la revendication 2 et la revendication 7, dans lequel l'élément optique (40) forme un rotateur de polarisation à 90 degrés, dans lequel chaque cristal électro-optique (10, 20) présente un axe diélectrique transverse (Y, Z) orthogonal à l'axe diélectrique longitudinal (X) et dans lequel l'axe diélectrique transverse (Y, Z) du premier cristal (10) est parallèle à l'axe diélectrique transverse (Y, Z) du second cristal (20).

9. Dispositif électro-optique (1, 100) selon l'une des revendications 1 à 7 prise en combinaison avec la revendication 2, dans lequel chaque cristal électro-optique (10, 20) présente un axe diélectrique transverse (Y, Z) orthogonal à l'axe diélectrique longitudinal (X) et dans lequel l'axe diélectrique transverse (Y, Z) du premier cristal (10) est orthogonal à l'axe diélectrique transverse (Y, Z) du second cristal (20).

10. Dispositif électro-optique (1, 100) selon l'une des revendications 5 à 9, comprenant un moyen de maintien opto-mécanique de l'élément optique (40).

11. Dispositif électro-optique (1, 100) selon l'une des revendications 1 à 10, comprenant au moins une électrode (53) s'étendant sur une face latérale du premier cristal (10) et sur une face latérale du second cristal (20).

12. Dispositif électro-optique (1, 100) selon l'une des revendications 1 à 12, dans lequel les faces optiques (11, 12, 21, 22) des cristaux électro-optiques (10, 20) présentent une surface inférieure à 100 mm².

13. Modulateur électro-optique comprenant un dispositif électro-optique (1, 100) selon l'une des revendications 1 à 12.

14. Procédé de fabrication d'un dispositif électro-optique (100) selon l'une des revendications 1 à 12, le procédé comprenant l'étape suivante :
e1) assemblage d'un dispositif électro-optique (1) par collage d'un premier cristal électro-optique (10) et d'un second cristal électro-optique (20) disposés optiquement en série au moyen d'une colle transparente.

## Patentansprüche

1. Elektrooptische Vorrichtung (1, 100) mit einem ersten elektrooptischen Kristall (10), einem zweiten elektrooptischen Kristall (20) und mindestens einer optisch durchsichtigen Klebstoffschicht (30, 35), einer optischen Eingangsseite (11, 21) und einer optischen Ausgangsseite (12, 22), wobei die optische Ausgangsseite (12) des ersten elektrooptischen Kristalls (10) durch Kleben mittels der mindestens einen Klebstoffschicht (30, 35) mit der optischen Eingangsseite (21) des zweiten elektrooptischen Kristalls (20) fest verbunden ist, wobei der erste elektrooptische Kristall (10) und der zweite elektrooptische Kristall (20) mit einer bestimmten Orientierung zueinander und optisch in Reihe angeordnet sind, um von jeder der optischen Seiten (12, 12, 21, 22) aus einen Lichtstrahl zu übertragen,
**dadurch gekennzeichnet, daß** die elektrooptischen Kristalle (10, 20) aus der Gruppe ausgewählt sind, die aus Sphalerit, Schwefelselenid, Zinktellurid, Wismutgermanat, Galliumarsenid, Indiumarsenid, Galliumphosphid, Kadmiumtellurid, Kaliumdihydrogenphosphat, Lithiumniobat, Lithiumthantalat, Bariumbetaborat, deuteriertes Kaliumdihydrogenphosphat, Ammoniumdihydrogenphosphat, Lithiumniobat, Lithiumtantalat, Bariumbetaborat, deuteriertes Kaliumdihydrogenphosphat, Kaliumtitanylphosphat, Rubidiumtitanylphosphat, Arsenattitanylphosphat, Kaliumniobat, Lithiumtriborat besteht.

2. Elektrooptische Vorrichtung (1, 100) gemäß Anspruch 1, wobei der erste elektrooptische Kristall (10) eine dielektrische Längsachse (X) aufweist, der zweite elektrooptische Kristall (20) eine dielektrische Längsachse (X) aufweist, wobei die dielektrische Längsachse (X) des ersten elektrooptischen Kristalls (10) zur dielektrischen Längsachse (X) des zweiten elektrooptischen Kristalls (20) parallel verläuft und wobei jede optische Seite (11, 12) des ersten elektrooptischen Kristalls (10) quer zur dielektrischen Längsachse (X) des ersten elektrooptischen Kristalls (10) angeordnet ist und jede optische Seite (21, 22) des zweiten elektrooptischen Kristalls (20) quer zur dielektrischen Längsachse (X) des zweiten elektrooptischen Kristalls (20) angeordnet ist.

3. Elektrooptische Vorrichtung (1, 100) gemäß einem der Ansprüche 1 bis 2, wobei der erste elektrooptische Kristall (10) und der zweite elektrooptische Kristall (20) dieselbe Länge haben und aus einem selben Material gefertigt und mit Wärmeausgleich eingebaut sind.

4. Elektrooptische Vorrichtung (1, 100) gemäß einem der Ansprüche 1 bis 3, wobei der Klebstoff aus einer Gruppe ausgewählt ist, die aus
- durch ein Sol-Gel-Verfahren erhaltene Klebstoffen,
- anorganischen Klebstoffen,
- organisch-mineralischen Klebstoffen
gebildet ist.

5. Elektrooptische Vorrichtung (1, 100) gemäß einem der Ansprüche 1 bis 4 mit einem durchsichtigen, eine erste optische Seite (41) und eine zweite optische Seite aufweisenden optischen Element (40), wobei die mindestens eine Klebstoffschicht (30, 35) eine erste Klebstoffschicht (30) und eine zweite Klebstoffschicht (35) aufweist und wobei die erste optische Seite (41) durch die erste Klebstoffschicht (30) an der optischen Ausgangsseite (12) des ersten elektrooptischen Kristalls (10) befestigt ist und die zweite optische Seite (42) durch die zweite Klebstoffschicht (35) an der optischen Eingangsseite (21) des zweiten elektrooptischen Kristalls (20) befestigt ist.

6. Elektrooptische Vorrichtung (1, 100) gemäß Anspruch 5, wobei das optische Element (40) aus einem optisch isotropen Material gefertigt ist.

7. Elektrooptische Vorrichtung (1, 100) gemäß Anspruch 5, wobei das optische Element (40) aus einem doppeltbrechenden Material gefertigt ist.

8. Elektrooptische Vorrichtung (1, 100) gemäß Anspruch 2 und Anspruch 7, wobei das optische Element (40) einen 90°-Polarisationsrotator bildet, wobei jeder elektrooptische Kristall (10, 20) eine zur dielektrischen Längsachse (X) senkrechte dielektrische Querachse (Y, Z) aufweist und wobei die dielektrische Querachse (Y, Z) des ersten Kristalls (10) zur dielektrischen Querachse (Y, Z) des zweiten Kristalls (20) parallel verläuft.

9. Elektrooptische Vorrichtung (1, 100) gemäß einem der Ansprüche 1 bis 7 in Kombination mit Anspruch 2, wobei jeder elektrooptische Kristall (10, 20) eine zur dielektrischen Längsachse (X) senkrechte dielektrische Querachse (Y, Z) aufweist und wobei die dielektrische Querachse (Y, Z) des ersten Kristalls (10) zur dielektrischen Querachse (Y, Z) des zweiten Kristalls (20) senkrecht verläuft.

10. Elektrooptische Vorrichtung (1, 100) gemäß einem der Ansprüche 5 bis 9 mit einem Mittel zum optomechanischen Halten des optischen Elements (40).

11. Elektrooptische Vorrichtung (1, 100) gemäß einem der Ansprüche 1 bis 10 mit mindestens einer Elektrode (53), die sich auf einer Seitenfläche des ersten Kristalls (10) und auf einer Seitenfläche des zweiten Kristalls (20) erstreckt.

12. Elektrooptische Vorrichtung (1, 100) gemäß einem der Ansprüche 1 bis 11, wobei die optischen Flächen (11, 12, 21, 22) der elektrooptischen Kristalle (10, 20) eine Fläche von kleiner als 100 mm² aufweisen.

13. Elektrooptischer Modulator mit einer elektrooptischen Vorrichtung (1, 100) gemäß einem der Ansprüche 1 bis 12.

14. Verfahren zur Herstellung einer elektrooptischen Vorrichtung (100) gemäß einem der Ansprüche 1 bis 12, wobei das Verfahren den folgenden Schritt aufweist:
e1) Zusammenbau einer elektrooptischen Vorrichtung (1) durch Zusammenkleben eines ersten elektrooptischen Kristalls (10) und eines zweiten elektrooptischen Kristalls, die optisch in Reihe angeordnet sind, mittels eines durchsichtigen Klebstoffs.

## Claims

1. An electro-optical device (1, 100) comprising a first electro-optical crystal (10), a second electro-optical crystal (20) and at least one layer of optically transparent glue (30, 35), an input optical face (11, 21) and an output optical face (12, 22), the output optical face (12) of the first electro-optical crystal (10) being made integral with the input optical face (21) of the second electro-optical crystal (20) by gluing using said at least one layer of glue (30, 35), the first electro-optical crystal (10) and the second electro-optical crystal (20) being arranged in a determined orientation relative to each other and in optical series to transmit a light beam through each of the optical faces (11, 12, 21, 22),
**characterized in that** the electro-optical crystals (10, 20) are chosen in the group consisted of: sphalerite, sulphur selenide, zinc telluride, bismuth germanate, gallium arsenide, indium arsenide, gallium phosphide, cadmium telluride, potassium dihydrogen phosphate, ammonium dihydrogen phosphate, lithium niobate, lithium tantalate, barium beta-borate, deuterated potassium dihydrogen phosphate, potassium titanyl phosphate, rubidium titanyl phosphate, arsenate titanyl phosphate, potassium niobate, lithium triborate.

2. The electro-optical device (1, 100) according to claim 1, wherein the first electro-optical crystal (10) has a longitudinal dielectric axis (X), the second electro-optical crystal (20) has a longitudinal dielectric axis (X), the longitudinal dielectric axis (X) of the first electro-optical crystal (10) being parallel to the longitudinal dielectric axis (X) of the second electro-optical crystal (20), and wherein each optical face (11, 12) of the first electro-optical crystal (10) is arranged transversally to the longitudinal dielectric axis (X) of the first electro-optical crystal (10) and each optical face (21, 22) of the second electro-optical crystal (20) is arranged transversally to the longitudinal dielectric axis (X) of the second electro-optical crystal (20).

3. The electro-optical device (1, 100) according to one of claims 1 to 2, wherein the first electro-optical crystal (10) and the second electro-optical crystal (20) are of same length and made of a same material and thermally compensated.

4. The electro-optical device (1, 100) according to one of claims 1 to 3, wherein the glue is chosen in the group consisted of:
- glues obtained by a sol-gel process;
- inorganic glues;
- organo-mineral glues.

5. The electro-optical device (1, 100) according to one of claims 1 to 4, comprising a transparent optical element (40) having a first optical face (41) and a second optical face (42), said at least one layer of glue (30, 35) comprising a first layer of glue (30) and a second layer of glue (35), and wherein the first optical face (41) is attached to the output optical face (12) of the first electro-optical crystal (10) by the first layer of glue (30) and the second optical face (42) is attached to the input optical face (21) of the second electro-optical crystal (20) by the second layer of glue (35).

6. The electro-optical device (1, 100) according to claim 5, wherein the optical element (40) is made of an optically isotropic material.

7. The electro-optical device (1, 100) according to claim 5, wherein the optical element (40) is made of a birefringent material.

8. The electro-optical device (1, 100) according to claim 2 and claim 7, wherein the optical element (40) forms a 90-degree polarization rotator, wherein each electro-optical crystal (10, 20) has a transverse dielectric axis (Y, Z) orthogonal to the longitudinal dielectric axis (X) and wherein the transverse dielectric axis (Y, Z) of the first crystal (10) is parallel to the transverse dielectric axis (Y, Z) of the second crystal (20).

9. The electro-optical device (1, 100) according to one of claims 1 to 7, taken in combination with claim 2, wherein each electro-optical crystal (10, 20) has a transverse dielectric axis (Y, Z) orthogonal to the longitudinal dielectric axis (X) and wherein the transverse dielectric axis (Y, Z) of the first crystal (10) is orthogonal to the transverse dielectric axis (Y, Z) of the second crystal (20).

10. The electro-optical device (1, 100) according to one of claims 5 to 9, comprising an opto-mechanical holding means for the optical element (40).

11. The electro-optical device (1, 100) according to one of claims 1 to 10, comprising at least one electrode (53) extending over a side face of the first crystal (10) and over a side face of the second crystal (20).

12. The electro-optical device (1, 100) according to one of claims 1 to 11, wherein the optical faces (11, 12, 21, 22) of the electro-optical crystals (10, 20) have a surface area lower than 100 mm².

13. An electro-optical modulator comprising an electro-optical device (1, 100) according to one of claims 1 to 12.

14. A method for manufacturing an electro-optical device (100) according to one of claims 1 to 12, the method comprising the following step:
e1) assembling an electro-optical device (1) by gluing a first electro-optical crystal (10) and a second electro-optical crystal (20) arranged in optical series by means of a transparent glue.
